# EUROPEAN PATENT APPLICATION

(11) **EP 2 704 445 A1**
(43) Date of publication of application: **05.03.2014**
(21) Application number: 13165562.3
(22) Date of filing: 26.04.2013
(51) Int. Cl.: H04N 21/414, H04N 21/431, H04N 21/466, H04N 21/475, H04N 21/482, H04N 21/845

(54) **Rating media fragments and use of rated media fragments**

(30) Priority: 30.08.2012 US 201213599277
(71) Applicant: BlackBerry Limited, Waterloo, ON N2K 0A7 (CA)
(72) Inventor: Chitturi, Suresh, Irving Texas 75039 (US)
(74) Representative: Moore, Barry

(57) **Abstract**

An apparatus (102, 116, 108, 112) and method (300, 500) for granularly rating media are disclosed herein. The method (300, 500) includes receiving (304) an identification of a first fragment of the media from the media as a whole from a use. The method (300, 500) additionally includes receiving (306) a rating of the first fragment of the media from the user.

## Description

### CROSS-REFERENCE TO RELATED APPLICATIONS

This application claims priority to U.S. Patent Application No. 13/599,277 entitled "Rating Media Fragments and Use of Rated Media Fragments" filed on August 30, 2012, the content of which is incorporated herein by reference in its entirety.

### TECHNICAL FIELD

The present disclosure relates generally to rating media. More particularly, the present disclosure relates to granularly rating media and uses for the granularly rated media.

### BACKGROUND

User ratings are very popular on the Internet. User ratings exist for a variety of items including, but not limited to, products, services, media (e.g., video, images, text), in commercial contexts, and in non-commercial contexts such as in social media sites. Users enjoy sharing their opinions, experience, knowledge, perspective, complaints, praise, and other commentary about items - often without being paid or otherwise being compensated for their efforts. User ratings are mutually beneficial to website providers as well. Website providers, such as online retailers, enjoy increased web traffic and ultimately sales due to the existence and extent of user ratings provided on their websites. Amazon.com is well-known as a destination for viewing user ratings on a wide variety of products. Website providers that do not expressly sell anything, such as social network sites, also benefit from user ratings because their popularity is derived from the wealth of user inputs.

Currently users rate digital media in its entirety. For example, youtube.com permits viewers to rate video clips positively or negatively and additionally provide written commentary about the video clips. Even for positively rated video clips, however, it is not uncommon for only certain portion(s) of a video clip to be better than other portion(s) of that video clip. It is also not clear which portion(s) are the better parts without viewing the video clip in its entirety. If the video clip is a long video clip, for example, a soccer match, having to view the entire soccer match to see the goals is inefficient and negatively impacts user experience.

Thus, it would be beneficial to provide a mechanism for users to granularly rate media than is currently provided. It would also be beneficial to use the granularly rated media information for monetization purposes associated with the rated media.

### BRIEF DESCRIPTION OF THE DRAWINGS

Some embodiments are illustrated by way of example and not limitations in the figures of the accompanying drawings, in which:

FIG. 1 illustrates an example system for capturing and using granular user ratings of media according to some embodiments.

FIG. 2 illustrates example modules to implement the operations and functionalities of FIGs. 3 and 5 according to some embodiments.

FIG. 3 illustrates an example flow diagram for obtaining user ratings of media fragments according to some embodiments.

FIGs. 4A-4F illustrate various example screens provided on the display of a mobile device to capture user's identification of a media fragment of interest and associated user rating/comments according to some embodiments.

FIG. 5 illustrates an example flow diagram for using the user ratings of media fragments according to some embodiments.

FIGs. 6A-6C illustrate example presentation of user rating distribution for media according to some embodiments.

FIG. 7 shows a diagrammatic representation of a machine in the example form of a computer system within which a set of instructions are executed to cause the machine to perform any one or more of the methodologies of FIGs. 3 and 5 according to some embodiments.

The headings provided herein are for convenience only and do not necessarily affect the scope or meaning of the terms used. Like reference numerals in the drawings denote like elements.

### DETAILED DESCRIPTION

Described in detail below is an apparatus and method for a user to identify a media fragment of interest from a media as a whole and to provide user rating(s) of the identified media fragment of interest. The media comprises video, image, text, graphic, photograph, audio, presentation, time-varying content, and/or static content. The collection of such data from a plurality of users for a given media facilitates automatic highlighting of specific media fragment(s) for the given media - those fragment(s) found to be the most relevant by a plurality of users - as opposed to the entire media. The fragment(s) specified by the plurality of users (and the corresponding user ratings) also permit later users to directly "jump" to those fragment(s) of interest rather than having to view the entire media to determine the interesting or likeable parts. The identified media fragment(s) of interest and corresponding user rating(s) (collectively referred to as granular user ratings of media) also enables automatic and dynamic selection of a thumbnail for the given media in accordance with its granular user ratings. Advertisement selection and/or advertisement placement within the given media is also targeted (or becomes more targeted) using the given media's granular user ratings.

Various modifications to the embodiments will be readily apparent to those skilled in the art, and the generic principles defined herein may be applied to other embodiments and applications without departing from the scope of the invention. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the invention with unnecessary detail. Thus, the present disclosure is not intended to be limited to the embodiments shown, but is to be accorded the widest scope consistent with the principles and features disclosed herein.

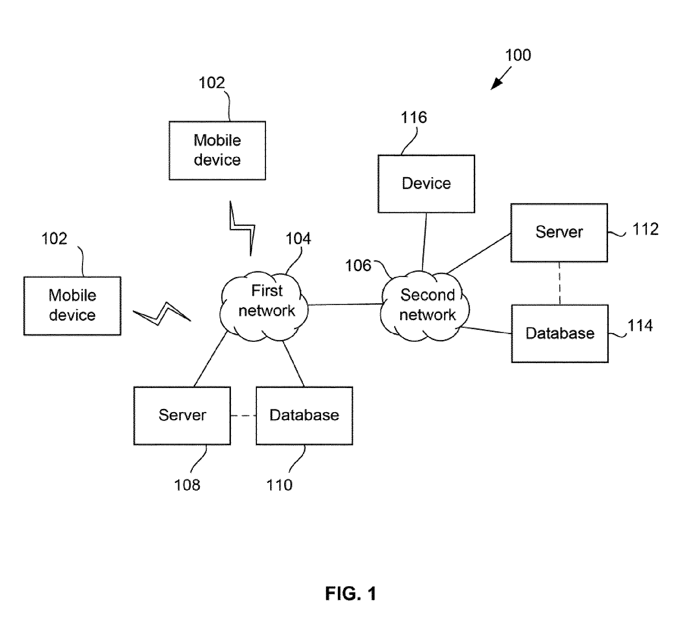

FIG. 1 illustrates an example system 100 for capturing and using granular user ratings of media (e.g., videos, images, text, graphic) according to some embodiments. The system 100 includes a plurality of mobile devices 102, a first network 104, a second network 106, a first server 108, a first database 110, a second server 112, a second database 114, and one or more devices 116.

Each of the plurality of mobile devices 102 comprises a mobile communication device capable of wireless communication with the first network 104. Each of the mobile devices 102 comprises a computer or computing device, including but not limited to, a cellular or mobile phone, smart phone, tablet, portable digital assistant (PDA), Internet appliance, hand-held device, wireless device, portable device, laptop, netbook, ultrabook, wearable computers, multi-processor systems, microprocessor-based or programmable consumer electronics, mini-computers, and the like. In some embodiments, each of the mobile devices 102 includes, but is not limited to, an input sensor (e.g., camera, bar code reader, machine readable information reader, physical keyboard, virtual keyboard provided using software on a touch screen), transceiver, storage unit, display (e.g., touch screen), one or more input mechanisms (e.g., keyboard, trackball, trackpad, touch screen), and a processor. The processor is in communication with and configured to coordinate control of each of the input sensor, transceiver, storage unit, display, and input mechanisms. The mobile device 102 further includes one or more applications such as, but not limited to, a web browser, messaging application, and one or more apps acquired from an application store or library, and interface and communication capabilities to communicate with one or more components within the system 100. Mobile devices 102 can be geographically distributed from each other.

Device 116 is configured for wired and/or wireless (not shown) communication with the second network 106. Device 116 is otherwise similar to mobile devices 102. Although a single device 116 is depicted in FIG. 1, it is understood that a plurality of devices can communicate with the second network 106. Each of the mobile devices 102 and device 116 may also be referred to as a mobile device or a mobile communication device.

First network 104 comprises a wireless communications network such as, but not limited to, a cellular network, WiFi network, WiMax network, wireless local area network (WLAN), wireless wide area network (WWAN), wireless metropolitan area network (WMAN), wireless virtual private network (WVPN), an ad hoc network, or a combination of two or more such networks. When first network 104 comprises a public network, security features (e.g., VPN/SSL secure transport) may be included to ensure authorized access within the system 100.

Second network 106 comprises another communications network such as, but not limited to, a local area network (LAN), a wireless LAN (WLAN), a wide area network (WAN), a wireless WAN (WWAN), a metropolitan area network (MAN), a wireless MAN, a WiFi network, a WiMax network, an ad hoc network, an intranet, an extranet, a virtual private network (VPN), a portion of the Internet, the Internet, a portion of a public switched telephone network (PSTN), a cellular network, or a combination of two or more such networks. When second network 106 comprises a public network, security features (e.g., VPN/SSL secure transport) may be included to ensure authorized access within system 100. First and second networks 104, 106 are operably connected to each other.

Certain devices directly access first network 104 but not the second network 106 and vice versa. For example, the mobile devices 102 have direct access to the first network 104 but not necessarily a direct access to the second network 106. Conversely, the device 116 has direct access to the second network 106 but not the first network 104. In order to facilitate communication between networks 104 and 106, each of the networks 104, 106 includes servers, databases, switches, routers, base stations, repeaters, software, firmware, intermediating servers, and/or other components (not shown) to facilitate communication between components with access to the first network 104 (e.g., mobile devices 102, server 108, database 110) and components with access to the second network 106 (e.g., device 116, server 112, database 114). In one embodiment, the first network 104 comprises a cellular network and the second network 106 comprises the Internet.

Server 108 comprises one or more computers or processors configured to communicate with the mobile devices 102 and/or database 110 via the first network 104. Server 112 comprises one or more computers or processors configured to communicate with the device 116 and/or database 114 via the second network 106. Each of the server 108 and server 112 is configured to host one or more applications accessed by the mobile devices 102, 116; to provide processing functionalities for the mobile devices 102, 116; to provide data, content, images, audio, video, graphics, etc. to the mobile devices 102, 116; to track and monitor activities associated with the mobile devices 102, 116; and/or facilitate access to and store information in the databases 1110, 114. Each of server 108 and server 112 includes one or more of, for example, one or more web servers hosting e-commerce sites, one or more servers hosting media access services, one or more servers providing user interface (UI) functionalities in connection with granular user rating of media, one or more messaging servers (e.g., instant messaging (IM), short message service (SMS), text messaging, Blackberry Messenger, electronic mail (email), push messaging, and the like), one or more servers to track and gather user activity and preferences, one or more servers hosting an app store, one or more payment infrastructure servers, and the like. More than one server can be associated with each of the first and second networks 104, 106.

Each of database 110 and database 114 comprises one or more storage devices configured to store data and/or instructions for use by server 108, server 112, mobile devices 102, and/or device 116. The content of database 110 is accessed via the first network 104 or directly by the server 108. The content of database 114 is accessed via the second network 106 or directly by the server 112. The content of each of databases 110, 114 includes, but is not limited to, user profiles, social graphs, device information, user preferences, app library, advertisements, music library, video library, image library, textual library, thumbnails, user ratings of media, and the like. Database 110 and database 114 may be located at one or more geographically distributed locations from each other and also from the servers 108, 112. Alternatively, one or more of databases 110, 114 may be included within respective servers 108, 112.

Alternatively, although the first network 104 and second network 106 are shown as two networks, the two networks can be implemented together as a single network configured to support both wireless and wired communications. In this configuration, servers 108, 112 can be combined together and databases 110, 114 can also be combined together.

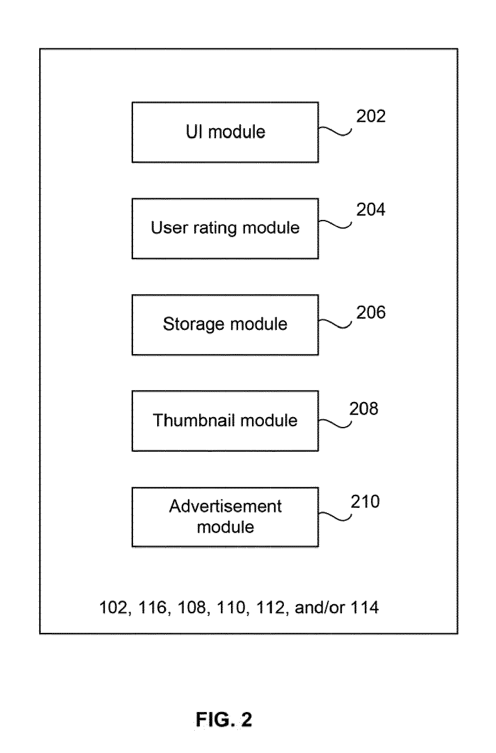

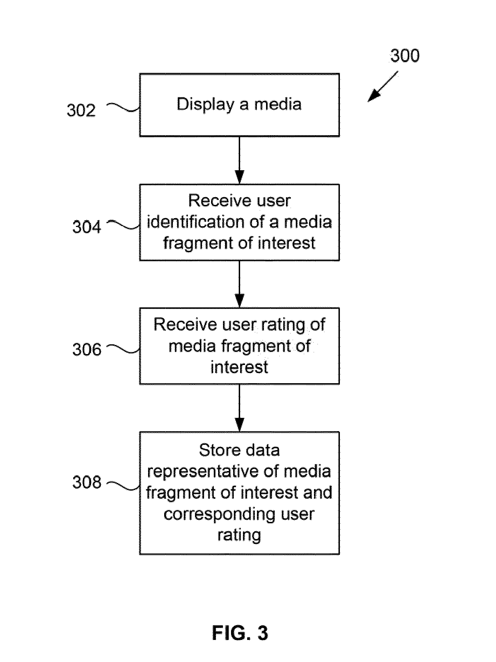

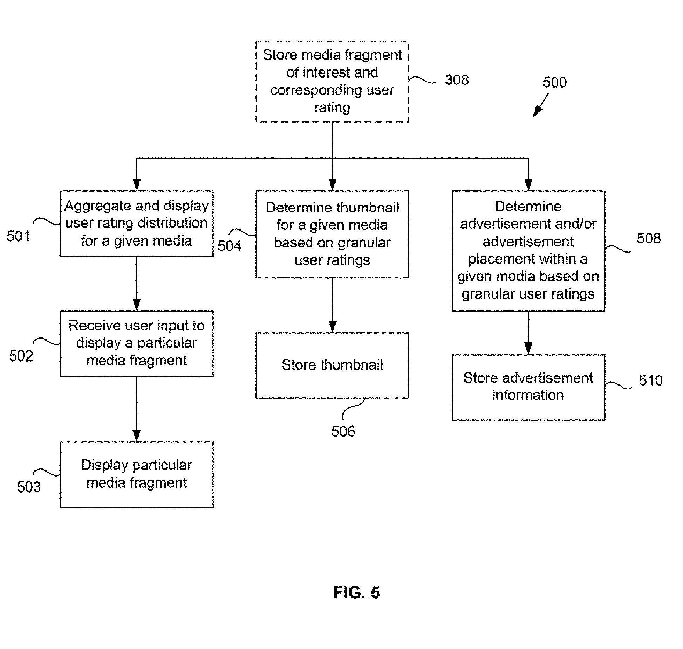

FIG. 2 illustrates example modules included in the server 108, database 110, server 112, database 114, mobile device 102, and/or device 116 to implement the operations and functionalities of FIGs. 3 and 5 according to some embodiments. FIG. 3 illustrates an example flow diagram 300 for obtaining user ratings of media fragments according to some embodiments. FIG. 5 illustrates an example flow diagram 500 for using the user ratings of media fragments according to some embodiments. Although mobile device 102 is discussed below with respect to discussion of FIGs. 3 and 5, it is understood that similar operations can occur using device 116.

The modules of FIG. 2 comprise one or more software components, programs, applications, apps, or other units of code base or instructions configured to be executed by one or more processors included in the server 108, database 110, server 112, database 114, mobile device 102, and/or device 116. FIG. 2 includes a user interface (UI) module 202, a use rating module 204, a storage module 206, a thumbnail module 208, and an advertisement module 210. Although modules 202-210 are shown as distinct modules in FIG. 2, it should be understood that modules 202-210 may be implemented as fewer or more modules than illustrated. It should also be understood that any of modules 202-210 may communicate with one or more components included in the system 100, such as server 108, database 110, server 112, database 114, mobile devices 102, and/or device 116.

In one embodiment, the modules of FIG. 2 are executed by one or more processors included in the server 108 or server 112. The mobile devices 102 and device 116 access functionalities associated with the modules via the first network 104 or second network 106, respectively. The mobile devices 102 and device 116 may access the modules via a web interface using a web browser. In another embodiment, the modules of FIG. 2 are executed by one or more processors included in the mobile devices 102 or device 116. The modules may be included in an app, and the app installed on the mobile devices 102 and device 116. The mobile devices 102 and device 116 communicates with the server 108, database 110, server 112, and/or database 114 to obtain media for viewing and interaction in the course of using the app. In still another embodiment, some of the modules of FIG. 2 are executed by one or more processors included in the mobile devices 102 or device 116, while others of the modules of FIG. 2 are executed by one or more processors included in the server 108 or server 112. The modules may be included in an app, and the app installed on the mobile devices 102 and device 116. For example, at least the user interface (UI) functionalities may be provided by the mobile devices 102 or device 116, while other functionalities are provided by the server side (server 108 or server 112).

At a block 302 of FIG. 3, the UI module 202 is configured to display media such as, but not limited to, video, image, text, graphic, photograph, audio, presentation, time-varying content, static content, and other content, on a display of the mobile device 102 in order for a user to view and interact with the displayed media, including selecting/specifying a portion of the media of interest (referred to as a media fragment of interest) and providing user rating(s) of each media fragment of interest. The user views the displayed media and when the user is ready to submit a rating about the media, the UI module 202 provides user rating input tools on the display of the mobile device 102. Alternatively, the user rating input tools are provided at the same time that the media is presented on the mobile device 102.

At a block 304, the user rating module 204 is configured to receive user identification of a media fragment of interest (also referred to as a media portion) from the media as a whole. For media comprising video, audio, or other content that changes (or is dynamic) over time (collectively referred to as time-varying media or dynamic media), the user indicates a media fragment of interest by specifying at least a particular time point of the media. As an example, media that changes over time may include an associated time index (indicator) to visually indicate the media as a function of time. The user may indicate a start time on the time index, a start time and a stop/end time on the time index, a start time on the media as the media is playing, a start time and a stop time on the media as the media is playing, or the UI module 202 may provide one or more buttons that can be actuated to specify a particular start time or actuated for a particular time duration to indicate a particular start and stop time. If no stop/end time is specified by the user (e.g., the user only specifies a particular start time for the media), then the stop/end time may comprise the end of the media, a pre-determined amount of time after the specified start time (e.g., stop time = start time + (0.1)*(time length of entire media)), is open-ended (e.g., the user rating is only relevant to the start time), or other variants thereof. The user rating module 204 receives time index value(s) corresponding to the user identified media fragment of interest.

For media comprising images, photographs, graphics, text, and other content that is static over time (collectively referred to as static media), the user indicates a particular portion of the media by specifying a bound area on the media, indicates a particular point on the media that is representative of an item distinguishable from other items included in the media, or selects from among pre-determined portions of the media. The user rating module 204 receives (Cartesian) coordinates relative to a known reference point on the media corresponding to the user specified point/area. As an example, the media may comprise a photograph showing a first, second, and third persons. The user may use an area indicator tool around the first person's head to indicate the portion of the photograph of interest. Alternatively, the user may point (or otherwise actuate) anywhere on or near the first person's head to indicate that the portion of the photograph of interest is the first person's head. As still another alternative, the UI module 202 may show three bound areas overlaid on top of the photograph, one bound area for each person's head. The user selects one of the provided bound areas to indicate the portion of the photograph of interest.

Next at a block 306, the user rating module 204 is configured to receive the user's rating of the media fragment of interest identified in block 304. The user rating (also referred to as user comments) comprises one or more of the user's opinions regarding the media fragment of interest such as, but not limited to, a binary rating (like/dislike, positive/negative, good/bad), a rating on a multi-point scale (e.g., a rating range of 1 to 5), freeform commentary, and the like. The UI module 202 provides one or more buttons, input fields, or other mechanisms on the display of the mobile device 102 for the user to provide his or her rating of the media fragment of interest. In some embodiments, blocks 304 and 306 are performed sequentially of each other - the user first indicates the media fragment of interest and then secondly provides a rating of such media fragment of interest. In other embodiments, blocks 304 and 306 can be performed simultaneously with each other.

Once both pieces of information are received, the storage module 206 is configured to store data specifying the media fragment or portion of interest (e.g., time index or coordinates) and the user's rating in a storage device, such as databases 110 and/or 114. In some embodiments, the stored data comprises metadata that is stored with the media. In other embodiments, the stored data comprises metadata (or other types of data) that is associated with the media but which may be stored separate from the media itself. When metadata is stored separately from the media, there may be mechanisms to allow binding or aggregation of the media with its associated metadata.

Blocks 302-308 can be repeated one or more times for a given user and/or a given media. For example, a given user can identify more than one fragment of interest in a given media and correspondingly provide user ratings for each of such identified fragment of interest. Similarly, more than one user can identify one or more fragment of interest in a given media and respectively provide user ratings. The storage module 206 is configured to aggregate such data across users for downstream use of the data, as described in detail below.

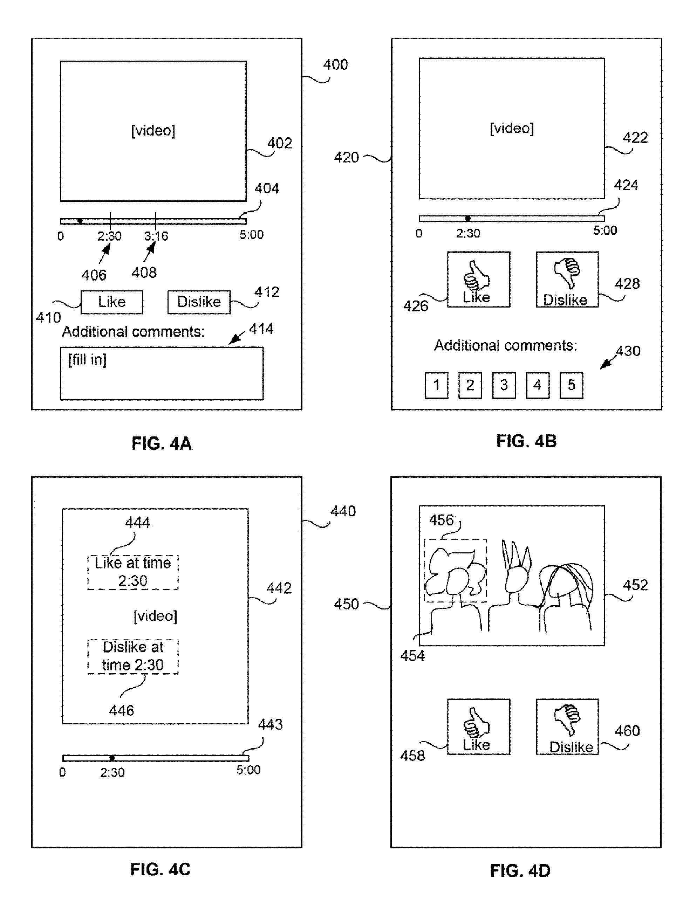

FIGs. 4A-4F illustrate various example screens provided on the display of the mobile device 102 to capture user's identification of a media fragment of interest and associated user rating/comments according to some embodiments. FIG. 4A shows a screen 400 including a video 402 and a time index 404 corresponding to the play length of the video 402. The user indicates a particular start time 406 and a particular stop/end time 408 on the time index 404 to specify the media fragment of interest. The user can use a mouse, trackpad, trackball, a touch screen, or other pointing mechanisms to specify the start and stop times 406, 408. Alternatively, the user indicates the start time 406 but not the stop time 408. The stop time 408 may then be considered to be the end of the time index, a pre-determined amount of time after the start time 406, open-ended, or other variants thereof. The screen 400 also includes a "like" button/icon 410 and a "dislike" button/icon 412 for the user to choose to indicate his or her opinion of the selected media fragment. Screen 400 shows an example of blocks 304 and 306 performed separately from each other. The screen 400 further includes an additional comments section 426, such as freeform commentary that the user can type into the provided input field.

FIG. 4B shows a screen 420 including a video 422 and a time index 424 corresponding to the play length of the video 420. Video 422 and time index 424 can be similar to the video 402 and time index 404, respectively, of FIG. 4A. For the embodiment shown in FIG. 4B, the user is permitted to actuate the "like" button/icon 426 or "dislike" button/icon 428 coincident with the portion of the video 420 currently being viewed by the user. If button 426 or 428 is actuated and then released rapidly, such user action may be interpreted as specification of at least a start time (but perhaps not a specification of a stop time). If button 426 or 428 is continuously actuated for a period of time (over a pre-set minimum duration time), then such user action may comprise specification of a start time and a stop time. FIG. 4B is an example of blocks 304 and 306 being performed simultaneously with each other. The screen 420 additionally provides an additional comments section 430, to rate, for example, the fragment of interest on a scale of 1 to 5.

FIG. 4C shows a screen 440 including a video 442 and a time index 443 corresponding to the play length of the video 420. Video 442 and time index 443 can be similar to the video 402 and time index 404, respectively, of FIG. 4A. As the video 442 plays on the screen 440, the user actuates, clicks, taps, touches, or otherwise expresses interest within the portion of the screen 440 that is playing the video 442 at a particular point in time, which corresponds to a particular portion of the video 442. In response, a "like" button/icon 444 and a "dislike" button/icon 446 are shown overlaid on top of the video 442. The user selects either the "like" button/icon 444 or the "dislike" button/icon 446 to input his or her rating of the particular portion of the video 442. The "like" button/icon 444 and "dislike" button/icon 446 (and similarly, buttons/icons 410, 412, buttons/icons 426, 428, buttons/icons 458, 460, and buttons/icons 478, 480) comprise graphic to visually indicate the binary ratings concept (e.g., thumbs up and thumbs down graphic), text corresponding to the graphic (e.g., the words "like" and "dislike"), and/or additional information such as the time index point corresponding to the media fragment of interest.

FIG. 4D shows a screen 450 including a photo 452 of three persons. The user has indicated an area of interest 456 using an area indicator tool. The area of interest 456 corresponds to the face of a leftmost person 454 in the photo 452. The user can then comment on whether he/she thinks positively of the area of interest 456 via actuation of a "like" button/icon 458 or negatively of the area of interest 456 via actuation of a "dislike" button/icon 460.

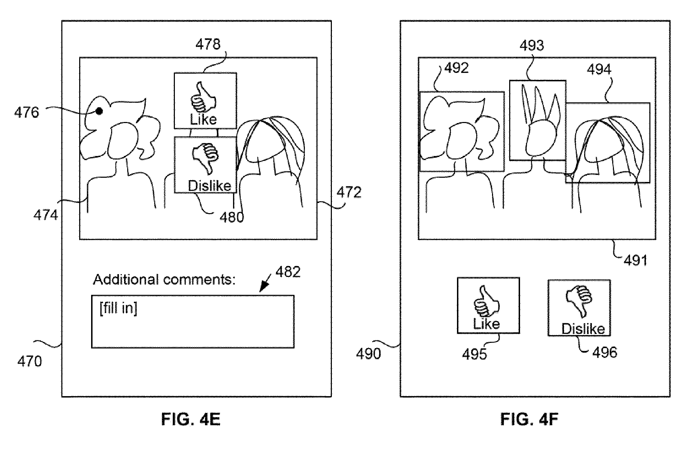

FIG. 4E shows a screen 470 including a photo 472 of three persons. Photo 472 may be similar to photo 452 of FIG. 4D. Unlike in FIG. 4D, the user expresses interest in a point or a small part of an item included in the photo 472 rather than a visually identifiable complete or near complete item(s) in the photo 472. Screen 470 shows the user expressing interest at a point 476 of the photo 472, which corresponds to a person's 474 hair, using a point indicator tool (not shown). The point 476 is interpreted as interest in the person 474 as a whole or at least the person's 474 face. In response, a "like" button/icon 478 and a "dislike" button/icon 480 are shown overlaid on top of the photo 472. The user selects either the "like" button/icon 478 or the "dislike" button/icon 480 to input his or her rating of the particular portion of the photo 472. Additional comments may be provided by the user via typing into a freeform commentary field 482 included in the screen 470.

FIG. 4F shows a screen 490 including a photo 491 of three persons. Photo 491 may be similar to photo 452 of FIG. 4D. In this embodiment, the UI module 202 pre-selects region(s) in the photo 491 that are candidate fragments of interest and displays an indicator corresponding to each of the pre-selected region(s). Three pre-selected regions are shown in screen 490: first area 492, second area 493, and third area 494. The user selects from among the provided pre-selected regions to specify the fragment of interest. For example, the user selects first area 492 corresponding to a first person's head. The user can then comment on his/her like or dislike of the content of first area 492 by selecting either a "like" button 495 or "dislike" button 496.

Each of the buttons 426, 428, 444, 446; area indicator tool; point indicator tool; and pre-selected regions 492-494 comprise example (media) fragment identifier icons. Each of buttons 410, 412, 428, 430, 444, 446, 458, 460, 478, 480, 495, 496; additional comment sections 414, 416; and freeform commentary field 482 comprise example (user) rating input icons.

It is understood that these and other implementation mechanisms to capture the media fragment of interest and the user's comment about such media fragment of interest are contemplated by the disclosure herein.

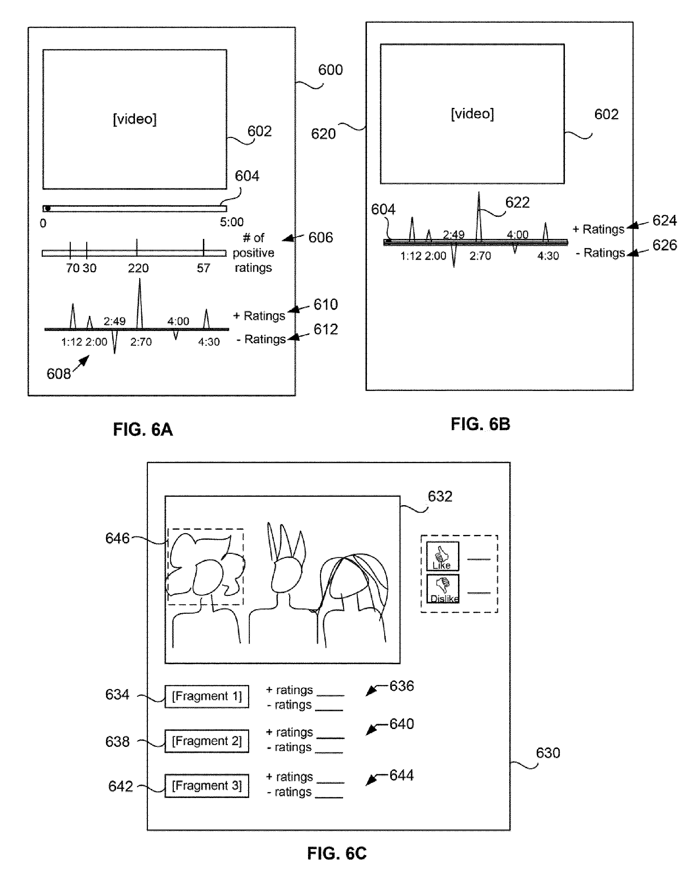

With the granular user rating data for a given media from a plurality of users, a number of uses of the granular user rating are possible that are not possible with user ratings of media as a whole. At a block 501 of FIG. 5, the user rating module 204 in conjunction with the UI module 202 are configured to aggregate the stored granular user ratings for a given media and present an aggregated user rating distribution on a display of the mobile device 102. FIGs. 6A and 6B illustrate example presentation of user rating distribution for a given time-varying media as a function of time. FIG. 6A shows a screen 600 including a video 602 and a time index 604 corresponding to the play length of the video 602. In one embodiment, a numerical user rating distribution 606 is provided that shows as a function of the play time of the video 602 the number of positive user ratings. In another embodiment, a graphical user rating distribution 608 can be provided as an alternative to the numerical user rating distribution 606. The graphical user rating distribution 608 includes bars (or other graphical elements) representative of the number of positive ratings 610 and negative ratings 612 as a function of the play time of the video 602. FIG. 6B shows a screen 620 including the video 602 and the time index 604. A graphical user rating distribution 622 includes bars (or other graphical elements) representative of the number of positive ratings 624 and negative ratings 626 as a function of the play time of the video 602. The graphical user rating distribution 622 is similar to the graphical user rating distribution 608, except the graphical user rating distribution 622 becomes visible when the user hovers over, clicks, taps, touches, or otherwise actuates the time index 604. Otherwise, the graphical user rating distribution 622 is invisible. Although not shown, either the numerical or graphical user rating distributions 606, 608, 622 may be included in a screen in which media fragment of interest and user rating are being captured, such as in screens 400, 420, or 440.

FIG. 6C shows a screen 630 including a static media 632, a plurality of thumbnails 634, 638, 642 representative of the different portions of the static media 632 specified by a plurality of users, and respective aggregate user ratings 636, 640, 644 for each of the plurality of thumbnails. As an alternative to the plurality of thumbnails 634, 638, 642 and aggregate user ratings 636, 640, 644 presented below the static media 632, the aggregate user ratings 636, 640, or 644 can be shown overlaid over the corresponding portion of the static media 632. As an example, when the user hovers over, clicks, taps, touches, or otherwise expresses interest in a portion of the static media 632 corresponding to the leftmost person, user ratings 636 becomes visible over the same portion of the static media 632 or on another portion of the screen 630, such as to the right of the static media 632. The plurality of thumbnails 634, 638, 642 representative of the different portions of the static media 632 specified by a plurality of users and respective aggregate user ratings 636, 640, 644 for each of the plurality of thumbnails are comprise an example user rating distribution for the static media 632.

Next at a block 502, the UI module 202 is configured to receive user input to display a particular media fragment from among those media fragment(s) previously identified by one or more users. As an example, the current user may view the user rating distribution for a given media (provided in block 501), then select the media fragment having the highest user ratings relative to the other media fragment(s) of the given media, select the media fragment having the most user ratings, select the media fragment having the worst user ratings, or whatever other criteria the current user is interested in. The current user clicks, taps, touches, or otherwise expresses interest in a representation of a particular media fragment on the displayed user rating distribution. Alternatively, the current user may interface with the media itself and manually bring up the particular media fragment (previously identified by other users) from the media (e.g., current user moves the time index bar for a video media to the particular time index noted for the particular media fragment having the highest user ratings).

In response, at a block 503, the UI module 202 is configured to display (or change the display to) the particular media fragment of interest to the current user. The current user's action in block 502 causes the media display to "jump" automatically to the particular media fragment. Returning to screen 600 of FIG. 6A, when the current user expresses interest in a particular media fragment representation in the user rating distributions 606 or 608, the video 602 starts playing the particular media fragment. Similarly, with respect to screen 630 of FIG. 6C, the current user expressing interest in a particular media fragment representation in the user rating distribution causes the static media 632 to change. The change comprises visually highlighting the particular media fragment of the static media 632 while the entire/whole static media 632 continues to be displayed. Or the change comprises only the particular media fragment being displayed in place of the entire/whole static media 632.

At a block 504, the thumbnail module 208 is configured to determine a (dynamic) thumbnail for a given media based on a portion of the media with the greatest number of positive user ratings. As the user ratings for different portions of the media change over time, the thumbnail for the given media may also change over time. Thus, rather than the system determining a thumbnail based on, for example, the first frame of video content, the existence of granular user ratings permit determination of a thumbnail for a given media that serves to represent the given media in accordance with the fragment of the given media that viewers found to be of the most interest. The thumbnail comprises at least a portion of the fragment having the highest user ratings (e.g., at least a frame of a video media). Then at a block 506, the storage module 206 is configured to store the determined thumbnail and associate it with the corresponding media, in databases 110 or 114.

At a block 508, the advertisement module 210 is configured to determine one or more advertisements and/or the portion(s) of a given media in which the one or more advertisements should be inserted based on the user ratings of different portions of the given media. As an example, the portion(s) of the given media with the highest interest by users (perhaps both positive and negative ratings) can be charged higher than portions of lower user interest. As another example, rather than having the system determine where to place advertisements within a given media, the user ratings pinpointing specific portions of the media automatically provide this information. And over time, the advertisement placements may change as user ratings change. As still another example, for a media containing a plurality of subject matters, advertisements provided for the media may be targeted to subject matter(s) within the media of the most interest to users (rather than guessing at the advertisements due to uncertainty about the subject matter(s) covered by the media).

In this manner, a mechanism is provided for users to rate particular fragments of media rather than the media as a whole. Each user selects the media fragment of interest and inputs his or her opinion of the selected media fragment of interest. The media comprises video, image, text, graphic, photograph, audio, presentation, time-varying content, and/or static content. User ratings comprise one or more of a binary rating (positive or negative), a rating on a pre-determined scale, a freeform rating, and other variants. In some embodiments, the user selection of the media fragment of interest and input of user rating(s) occur in sequential steps. In other embodiments, the user selection of the media fragment of interest and input of user rating(s) occur in a single step. Such annotation of media content facilitates automatic highlighting of specific media fragment(s) within a given media - those fragments that a plurality of users have specifically picked out - as opposed to the entire media. The fragment(s) specified by the plurality of users (and the corresponding user ratings) also permit later users to directly "jump" to those fragment(s) of interest rather than having to view the entire media to determine the interesting or likeable parts.

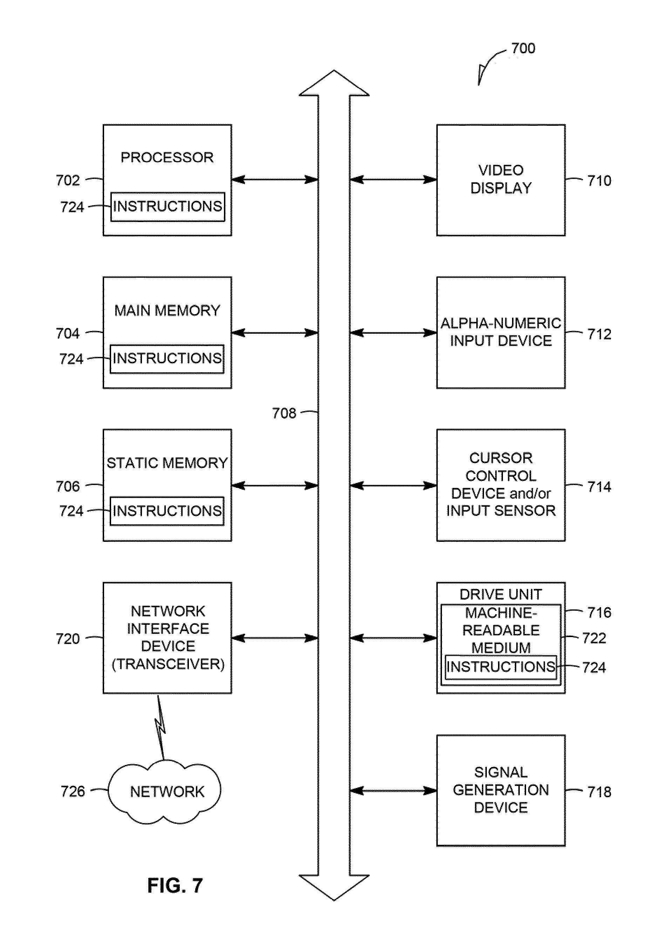

FIG. 7 shows a diagrammatic representation of a machine in the example form of a computer system 700 within which a set of instructions, for causing the machine to perform any one or more of the methodologies discussed herein, may be executed. The computer system 700 can comprise, for example, any of the mobile devices 102, device 116, server 108, and/or server 112. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server computer, a client computer, a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processor 702 (e.g., a central processing unit (CPU), a graphics processing unit (GPU), or both), a main memory 704 and a static memory 706, which communicate with each other via a bus 708. The computer system 700 may further include a video display unit 710 (e.g., liquid crystal display (LCD), organic light emitting diode (OLED) display, touch screen, or a cathode ray tube (CRT)). The computer system 700 also includes an alphanumeric input device 712 (e.g., a keyboard, a physical keyboard, a virtual keyboard using software), a cursor control device or input sensor 714 (e.g., a mouse, a trackpad, a trackball, a sensor or reader, a machine readable information reader, bar code reader), a disk drive unit 716, a signal generation device 718 (e.g., a speaker) and a network interface device or transceiver 720.

The disk drive unit 716 includes a machine-readable medium 722 on which is stored one or more sets of instructions (e.g., software 724) embodying any one or more of the methodologies or functions described herein. The software 724 may also reside, completely or at least partially, within the main memory 704 and/or within the processor 702 during execution thereof by the computer system 700, the main memory 704 and the processor 702 also constituting machine-readable media.

The software 724 may further be transmitted or received over a network 726 via the network interface device 720.

While the machine-readable medium 722 is shown in an example embodiment to be a single medium, the term "machine-readable medium," "computer readable medium," and the like should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present invention. The term "machine-readable medium" shall accordingly be taken to include, but not be limited to, non-transitory medium, solid-state memories, optical and magnetic media, and carrier wave signals.

It will be appreciated that, for clarity purposes, the above description describes some embodiments with reference to different functional units or processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Certain embodiments described herein may be implemented as logic or a number of modules, engines, components, or mechanisms. A module, engine, logic, component, or mechanism (collectively referred to as a "module") may be a tangible unit capable of performing certain operations and configured or arranged in a certain manner. In certain example embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor, application specific integrated circuit (ASIC), or array) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in dedicated and permanently configured circuitry, or in temporarily configured circuitry (e.g., configured by software) may be driven by, for example, cost, time, energy-usage, and package size considerations.

Accordingly, the term "module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices and can operate on a resource (e.g., a collection of information).

Although the present invention has been described in connection with some embodiments, it is not intended to be limited to the specific form set forth herein. One skilled in the art would recognize that various features of the described embodiments may be combined in accordance with the invention. Moreover, it will be appreciated that various modifications and alterations may be made by those skilled in the art without departing from the scope of the invention.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

## Claims

1. A method (300, 500) of rating media, the method comprising:
receiving (304), at a mobile device, an identification of a first fragment of the media from the media as a whole from a user; and
receiving (306), at the mobile device, a rating of the first fragment of the media from the user.

2. The method of claim 1, wherein the media comprises at least one of video, image, text, graphic, photograph, audio, presentation, time-varying content, and static content.

3. The method of any of claims 1-2, wherein the receiving (304) of the identification of the first fragment and the receiving (306) of the rating comprises a single step.

4. The method of any of claims 1-3, wherein the media comprises time-varying content and the receiving (304) of the identification of the first fragment comprises receiving selection of at least a particular time point of the media.

5. The method of any of claims 1-4, wherein the media comprises static content and the receiving (304) of the identification of the first fragment comprises receiving selection of the first fragment from among pre-determined fragment options, specification of the first fragment via an area indicator tool, or specification of a point on or near the first fragment.

6. The method of any of claims 1-5, wherein the rating comprises at least one of a positive rating, a negative rating, a rating on a pre-determined scale, and a freeform rating.

7. The method of any of claims 1-6, further comprising displaying (501) user ratings from a plurality of users for each of the identified fragments of interest of the media.

8. The method of claim 7, further comprising:
receiving (502) a request for a particular portion of the media using the displayed user ratings from the plurality of users; and
in response to the received (502) request, displaying (503) the particular portion of the media.

9. The method of any of claims 1-8, further comprising determining (504) a thumbnail representative of the media based on the first fragment having a highest rating from among fragments of the media from a plurality of users, the thumbnail comprising at least a portion of the first fragment.

10. The method of any of claims 1-9, further comprising determining (508) at least one of a first advertisement and a placement of a second advertisement within the media based on a second fragment of the media having a higher rating from among the first fragment and the second fragment of the media from a plurality of users.

11. The method of any of claims 1-10, wherein the receiving (304) of the identification of the first fragment comprises identifying at least a time index value corresponding to the first fragment.

12. The method of any of claims 1-11, wherein the receiving (304) of the identification of the first fragment comprises identifying at least a Cartesian coordinate corresponding to the first fragment relative to a reference point on the media.

13. The method of claim 11 or 12, further comprising storing (308) the time index value or Cartesian coordinate and the rating in association with the media.

14. A mobile device (102, 116) configured to perform the method of any one of claims 1-13.

15. A non-transitory computer readable medium having computer-readable instructions embodied therein for execution by a processor, the computer-readable instructions implementing the method of any one of claims 1-13.
